# EUROPEAN PATENT APPLICATION

(11) **EP 4 786 315 A1**
(43) Date of publication of application: **05.08.2026**
(21) Application number: 26151737.9
(22) Date of filing: 14.01.2026
(51) Int. Cl.: B62D 21/15, B62D 27/06, B62D 29/04, B60R 21/34, B62D 25/16

(54) **JOINING ELEMENT BETWEEN TWO PARTS OF A VEHICLE AND SYSTEM COMPRISING IT**

(30) Priority: 29.01.2025 ES 202530070
(71) Applicant: Seat, S.A., 08760 Martorell - Barcelona (ES)
(72) Inventor: Segura Santillana, Jose Angel, 08760 Martorell (ES); Calleja Garcia, Benjamin, 08760 Martorell (ES)
(74) Representative: Pons IP

(57) **Abstract**

The invention refers to a joining element between two vehicle parts (10, 11), comprising an elongated body (1), a first joining area (2) that connects the joining element to a first vehicle part (10), and a second joining area (3) that is solidly joined to a second vehicle part (11). The first joining area (2) comprises a first component (5, 6) that is linked to a second component (12, 13) of the first vehicle part (10), with a complementary shape to the first component (5, 6), one of them (5, 6, 12, 13) being a hole (6, 13) and the other a protrusion (5, 12) configured to pass through said hole (6, 13). The first and second components remain joined under a force parallel to the plane of the hole and disengage under a perpendicular force.

## Description

### OBJECT OF THE INVENTION

This invention refers to a joining element intended to join two parts of a vehicle, providing rigidity in a given direction and allowing the joining element to decouple when receiving an impact in another direction.

The invention also refers to a joining system between two joining pieces of a vehicle.

### BACKGROUND OF THE INVENTION

Several joining elements intended to join different parts of a vehicle are known in the prior art, in order to maintain the structure indeformable. A particular case of these joining elements consists of parts designed to deform when subjected to a certain load due to an impact on the vehicle. The object of these elements is for the energy received by the vehicle during impact not to be absorbed by the parts they join or by the impacting element, but by the joining element itself.

On the other hand, joining elements intended to join different parts of a vehicle are also known, designed to break when receiving a force exceeding a predefined value, for example, by means of fuses. The object of these elements is to facilitate deformation or relative movement between the vehicle parts they link.

However, no joining elements are known that are configured to absorb the energy of an impact only in certain directions, so that if the impact occurs in other directions, the joining element is not affected.

### DESCRIPTION OF THE INVENTION

This invention refers to a joining element intended to join two parts of a vehicle by means of said joining element, providing rigidity in a given direction and allowing the joining element to decouple when receiving an impact in another direction.

The joining element of the invention is configured by an elongated body which, at a first end, integrates a first joining area intended to join the joining element to a first vehicle part by means of a first fastening, and a second joining area, arranged at a second end opposite the first end, intended to join the joining element to a second vehicle part by means of a second fastening.

The first fastening is configured to join the joining element to the first vehicle part so that, depending on the direction of the load received, it may decouple easily, allowing, for example, relative displacement between the first and second parts. However, the second fastening is configured to solidly join the joining element to the second vehicle part in any direction.

To this end, the first joining area comprises a first component of the joining element configured to be mechanically linked in a male-female way with a second component of the first vehicle part, such that the first component has a complementary shape to the second component. This complementary shape varies between a hole and a protrusion that extends in a substantially perpendicular direction from the component to which it belongs, to be inserted into the hole of the other component.

Thus, the direction in which the joining element is rigidly fastened to the first vehicle part, that is, keeping the first joining area mechanically linked to the first vehicle part, is in a direction substantially parallel to the plane defined by the hole. Consequently, when force is applied to the joining element in a direction parallel to the plane defined by the hole, the joining element is configured not to decouple from the first vehicle part, keeping the structural rigidity of said area of the vehicle. In this way, the first and second vehicle parts remain mechanically linked through the joining element.

Conversely, when the joining element receives force in a direction substantially perpendicular to the plane defined by the hole, it easily becomes unlinked, although only in one direction. In the working position of the joining element, this direction is vertical. Thus, the joining element may easily decouple from the first vehicle part in an upward vertical direction, while remaining solidly fastened in the opposite, downward direction. Said configuration is particularly advantageous for pedestrian head impact protection. Thus, when the first part receives downward vertical force and said first vehicle part undergoes a downward movement, the first fastening is intended to mechanically unlink the first vehicle part from the joining element. As a result, the joining element does not function as a rigid joining element between the first and second vehicle parts, allowing relative displacement of the first vehicle part regarding the second vehicle part. Under the aforementioned example of a head impact on the first vehicle part area, this ensures that the area in question does not function as a rigid element, deforming and absorbing impact energy, thereby reducing the severity of the impact for the pedestrian.

The protrusion extends in a substantially perpendicular direction regarding the component to which it belongs, that is, along an axis perpendicular to said component, with a geometric shape decreasing in size as the distance increases from the component to which it belongs. In addition, the cross-section along this axis may be circular or polygonal, and in the latter case, it may be simple or star-shaped. As a non-limiting example, the following geometries may be suitable for the protrusion: semicircular, conical, pyramidal, frustoconical, or trapezoidal, with the hole having a complementary geometry. This axis also has the same direction as the axis of the hole in which it is assembled in the working position.

With this configuration, it is ensured that only a force in the direction perpendicular to the axis is stable, and when the direction of the force begins to deviate from the direction parallel to the axis, the first fastening will tend to decouple proportionally.

On the other hand, with the joining element in its working position, that is, fastened to the vehicle, the location of the first joining area is higher than that of the second joining area. In this way, it is ensured that a force with a downward vertical component will cause the joining element to decouple.

As for the second joining area, it comprises a first hole configured to be passed through by a screw that engages a threaded hole of the second vehicle part, such that the second joining area is solidly joined to the second vehicle part by means of the second fastening.

This joining is permanent, although also reversible. Thus, the joining element may be replaced, but this joining provides a solid connection between the joining element and the second vehicle part, resistant to forces in any direction. A type of joining other than a screwed joining may be used, provided that it allows a connection between the second joining area of the joining element and the second vehicle part that does not decouple under the application of the aforementioned forces, whether applied in a substantially parallel direction or in a substantially perpendicular direction to the plane defined by the hole.

In addition, to increase the resistance of the joining element, the elongated body may comprise at least one reinforcing rib and also two peripheral ribs along the length of the elongated body.

The reinforcing ribs are preferably a plurality of reinforcing ribs distributed along the entire length of the elongated body and, preferably, at least one reinforcing rib joins the peripheral ribs, with the object of providing greater rigidity to the joining element.

In addition, the joining element is preferably made of plastic material.

The invention also refers to a joining system between two vehicle parts that comprises a first vehicle part, a second vehicle part, and at least one joining element, as defined above, between both vehicle parts.

The joining system may be configured such that the first fastening comprises the first component of the joining element and the first vehicle part comprises the second component. In said configuration, the joining system may be configured so that the first component of the joining element comprises the protrusion and the second component of the first vehicle part comprises the hole.

Alternatively, the joining system may be configured such that the first fastening comprises the second component of the joining element and the first vehicle part comprises the first component. In said configuration, the joining system may be configured so that the first component of the joining element comprises the hole and the second component of the first vehicle part comprises the protrusion.

### DESCRIPTION OF THE DRAWINGS

In order to complement the description provided and to aid in a better understanding of the characteristics of the invention, according to a preferred practical embodiment of the same, a set of drawings is included as an integral part of said description, wherein for illustrative and non-limiting purposes, the following has been represented:
Figure 1. **It** shows a perspective view of the joining element of the invention, in a first embodiment, fastened to two vehicle parts.
Figure 2. **It** shows a detailed view of the first joining area of the joining element of Figure 1, wherein the first fastening is mechanically linked to the first vehicle part.
Figure 3. **It** shows a detailed view of the first joining area of the joining element of Figure 1, wherein the first fastening is mechanically unlinked from the first vehicle part.
Figure 4. It shows a sectional view of the joining element of Figure 1 before being assembled into the two vehicle parts.
Figure 5. It shows a sectional view of the joining element shown in Figure 4 after being assembled into the two vehicle parts.
Figure 6. It shows a sectional view of the joining element before being assembled into the two vehicle parts in a second embodiment.
Figure 7. It shows a sectional view of the joining element shown in Figure 6 after being assembled into the two vehicle parts.

Below is a list of the different elements represented in the figures with their associated numerical references:
- 1.: Elongated body.
- 2.: First joining area.
- 3.: Second joining area.
- 4.: First hole.
- 5.: First protrusion.
- 6.: First hole.
- 7.: Peripheral ribs.
- 8.: Reinforcing rib.
- 10.: First vehicle part.
- 11.: Second vehicle part.
- 12.: Second protrusion.
- 13.: Second hole.
- 14.: Threaded hole.
- 20.: Screw.

### PREFERRED EMBODIMENT OF THE INVENTION

Below, with the aid of the figures, there is a description of two preferred embodiments of the joining element for impact control according to this invention.

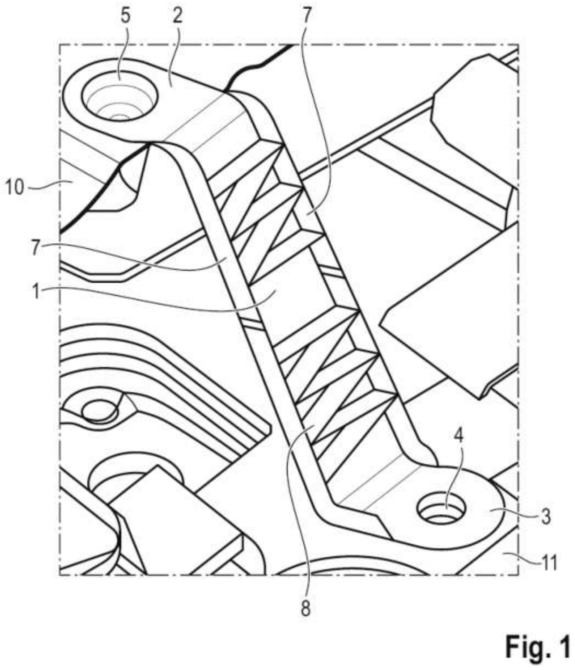

Figure 1 shows a first embodiment of the joining element for impact control of this invention, which is configured by means of a flat elongated body (1). Said elongated body (1) comprises two substantially flat surfaces inclined regarding said elongated body (1), arranged at each of the ends of said elongated body (1). Both flat surfaces are substantially parallel to each other. A first flat surface creates a first joining area (2) which, in turn, comprises a first fastening configured for its mechanical linkage with the first vehicle part (10). According to the embodiment shown, the first fastening integrates a first protrusion (5). In turn, the second flat surface creates a second joining area (3) which, in turn, comprises a second fastening configured for its mechanical linkage with the second vehicle part (11). According to the embodiment shown, the second fastening integrates a first hole (4).

In this way, the joining element is intended to be fastened by means of the first protrusion (5) to a first vehicle part (10), through a simple insertion of the protrusion (5) into the pertinent hole, as may be seen in Figure 1, while the first hole (4) is positioned over a second vehicle part (11) to be subsequently assembled in a rigid and immovable way, as will be explained below.

The joining element serves to mechanically link the first vehicle part (10) with the second vehicle part (11), the parts being, for example, a fender and a front-end or another structural element of the vehicle. The particularity of the joining element of this invention is that, upon receiving certain loads, it acts as a rigid element, mechanically linked to the first and second vehicle parts (10, 11), and upon receiving another type of loads, it is unlinked from the first vehicle part (10), allowing relative movement between said first and second vehicle parts (10, 11).

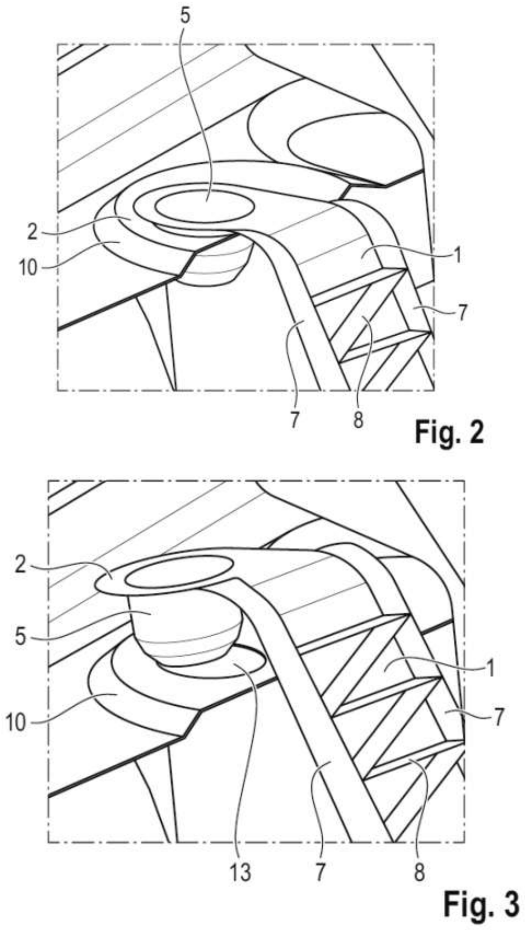

Figure 1 shows an elongated structure of the joining body, in which the first joining area (2) is in a higher position regarding the second joining area (3). According to the embodiment shown, the first fastening of the first joining area (2) comprises a first protrusion (5) that extends perpendicularly to the flat body supporting it. Specifically, said first protrusion (5) extends downward to be inserted into a second hole (13) provided in the first vehicle part (10). This configuration may be seen in the detailed view of Figure 2, wherein the first protrusion (5) comprises a cylindrical section whose perimeter decreases as the distance increases from the surface supporting it. In turn, the second hole (13) of the first vehicle part (10) comprises a cylindrical geometry whose diameter is substantially equal to the diameter of the cylinder, in particular to the area of maximum diameter of the protrusion (5).

The configuration shown in Figure 2 is of particular interest for keeping the first protrusion (5) mechanically linked to the second hole (13) and, therefore, for keeping the first fastening of the joining element mechanically linked to the first vehicle part (10) when the joining element receives forces in a direction substantially parallel to the plane defined by the second hole (13). For example, when the fender receives lateral contact on the side of the vehicle, such as when a person leans against the side of the vehicle, said force is transmitted to the joining element, which remains linked to the first vehicle part, transmitting said load to the second vehicle part (11).

In turn, the configuration explained above produces mechanical disengagement of the first protrusion (5) from the second hole (13) and, therefore, the first fastening of the joining element becomes mechanically disengaged from the first vehicle part (10) when the joining element receives forces in a direction substantially perpendicular to the plane defined by the second hole (13). Specifically, the flat surface of the first joining area (2) supporting the first protrusion (5) rests on the flat surface of the first vehicle part (10) that comprises the second hole (13). It should be noted that there is only one contact point of the first joining area (2) with the first vehicle part (10). When downward force is applied to the first vehicle part (10), producing a downward displacement or deformation of said first vehicle part (10), this results in the mechanical disengagement of the first protrusion (5) from the second hole (13). It is noted that said impact shall occur at a point that does not overlap with the first joining area (2). For example, when the fender receives a vertical head impact, it causes the vertical displacement of the fender, mechanically disengaging the first vehicle part (10) from the joining element and allowing the first vehicle part (10) to move relative to the second vehicle part (11), which is advantageous for energy absorption and reduction of pedestrian impact severity.

Figure 3 shows the same detailed view as Figure 2, but in a situation where the first vehicle part (10) has been displaced in a vertical direction and in a downward sense, so that the second hole (13) of said first vehicle part (10) has moved relative to the position of the protrusion (5) of the first joining area (2). Thanks to the geometry of said first protrusion (5) and the second hole (13), mechanical disengagement occurs, so that the joining element becomes disengaged from said first vehicle part (10), allowing the first vehicle part (10) to move relative to the second vehicle part (11).

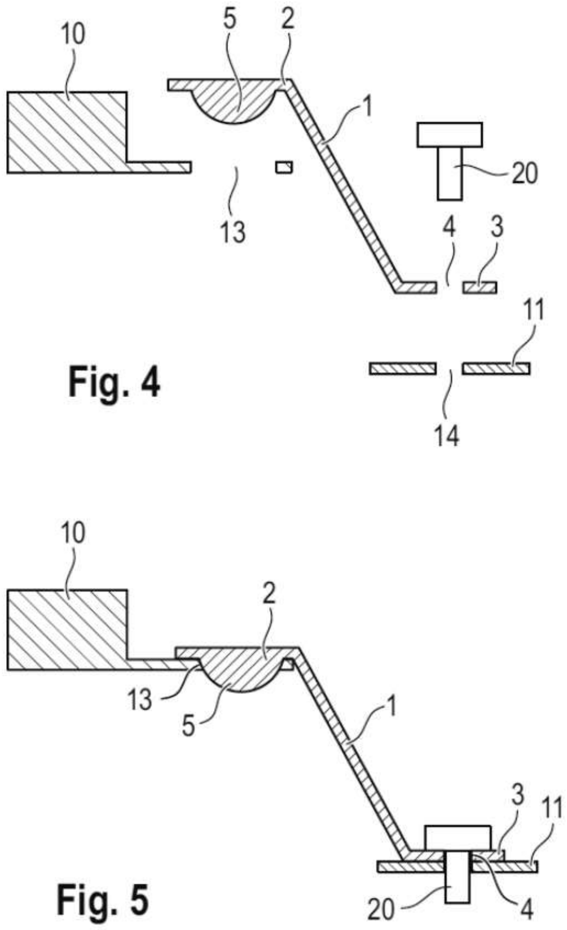

Figures 4 and 5 show the situation of the joining element before and after being assembled into the vehicle parts (10, 11), respectively, in this first embodiment. Thus, it may be seen that the first protrusion (5) of the first joining area (2) is housed in a second hole (13) of the first vehicle part (10) and that the second joining area (3) is fastened to the second vehicle part (11) by inserting a screw (20) that passes through it to thread into a threaded hole (14) of the second vehicle part (11).

In the embodiment shown, the first protrusion (5) comprises a hemispherical geometry, with a circular cross-section that decreases in perimeter as the distance increases from the first joining area (2). In turn, the second hole (13) of the first vehicle part (10) comprises a circular section whose diameter is substantially equal to the area of maximum diameter of the first protrusion (5). This complementary geometry between the first protrusion (5) and the second hole (13) ensures that both elements remain mechanically linked to each other when forces are applied in a direction substantially parallel to the plane defined by said hole (13). Conversely, due to the decreasing diameter of the first protrusion (5), both components become mechanically disengaged when a force substantially perpendicular to the plane defined by said hole (13), greater than a predefined value, appears, said force causing a downward displacement of the first vehicle part (10) relative to the first joining area (2).

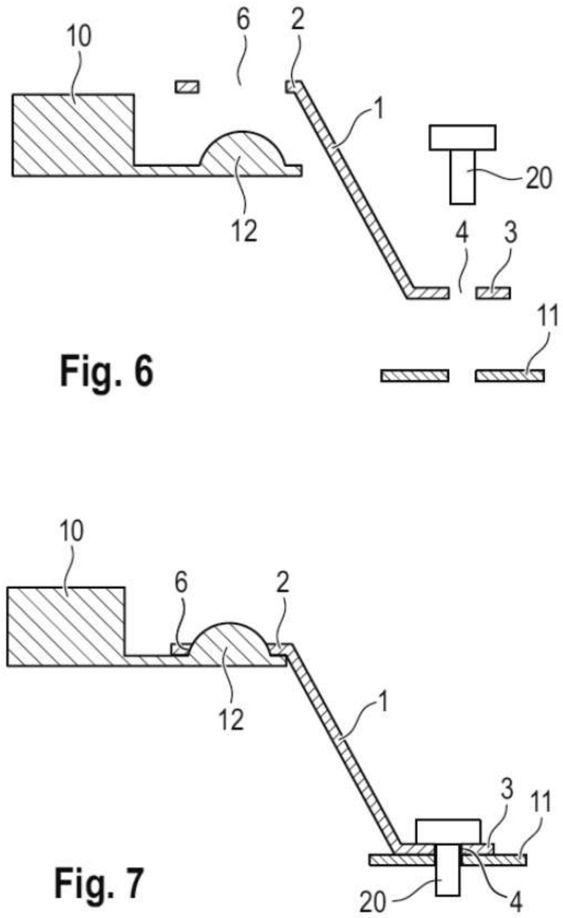

Figures 6 and 7 show a second embodiment of the joining element and of the first vehicle part (10). As in the embodiment shown above, the first joining area (2) rests on the first vehicle part (10), but in this case the first joining area (2) of the joining element integrates a first hole (6) intended to be fastened onto a second protrusion (12) integrated into the first vehicle part (10). As shown, the second protrusion (12) decreases in diameter as the distance increases from the first vehicle part (10), but in an upward direction. In turn, the second joining area (3) is fastened to the second vehicle part (11) in the same way shown above, that is, by means of the screw (20).

## Claims

1. Joining element between two parts (10, 11) of a vehicle, comprising:
- an elongated body (1);
- a first joining area (2) located at a first end of the elongated body (1) intended to join the joining element with a first vehicle part (10) by means of a first fastening; and
- a second joining area (3) arranged at a second end of the elongated body (1), opposite the first end, intended to join the joining element with a second vehicle part (11) by means of a second fastening, the joining element being solidly joined to the second vehicle part (11) by means of said second fastening;
the joining element being **characterized in that**:
- the first joining area (2) comprises a first component (5, 6) of the joining element configured to be mechanically linked to a second component (12, 13) of the first vehicle part (10);
- the first component (5, 6) has a shape complementary to the second component (12, 13), one of the components (5, 6, 12, 13) being a hole (6, 13) and the other a protrusion (5, 12) projecting from the component of which it belongs and extending in a direction substantially perpendicular to said component of which it forms part, the protrusion (5, 12) being configured to pass through said hole (6, 13), such that the first fastening is intended to keep the first component (5, 6) and the second component (12, 13) joined under the application of a force applied in a direction substantially parallel to the plane defined by the hole (6, 13), and intended to mechanically unlink the first component (5, 6) and the second component (12, 13) under the application of a force applied in a direction substantially perpendicular to the plane defined by the hole (6, 13).

2. The joining element of Claim 1, wherein the protrusion (5, 12) comprises a geometric shape that decreases dimensionally as the distance from the component of which it belongs increases.

3. The joining element of Claim 2, wherein the protrusion (5, 12) has a circular cross-section perpendicular to the extending direction of said protrusion (5, 12).

4. The joining element of Claim 2, wherein the protrusion (5, 12) has a polygonal cross-section perpendicular to the extending direction of said protrusion (5, 12).

5. The joining element of Claim 4, wherein the cross-section of the protrusion (5, 12) can be selected between simple polygonal or star-shaped.

6. The joining element according to any of the preceding claims, wherein the first joining area (2) is arranged in a higher position regarding the second joining area (3), along a direction perpendicular to the plane defined by the hole (6, 13).

7. The joining element according to any of the preceding claims, wherein the second joining area (3) comprises a first hole (4) configured to be passed through by a screw (20) that is coupled into a threaded hole (14) of the second vehicle part (11), such that the second joining area (3) is solidly secured to the second vehicle part (11) by means of the second fastening.

8. The joining element according to any of the preceding claims, wherein the elongated body (1) comprises at least one reinforcing rib (8).

9. The joining element of Claim 8, wherein the elongated body (1) comprises two peripheral ribs (7) extending along the elongated body (1).

10. The joining element according to Claims 8 and 9, wherein the at least one reinforcing rib (8) connects the two peripheral ribs (7).

11. The joining element according to any of the preceding claims, wherein the joining element is made of plastic material.

12. Joining system between two vehicle parts, comprising a first vehicle part (10), a second vehicle part (11), and at least one joining element between two vehicle parts according to any of the preceding claims.

13. The joining system according to Claim 12, wherein the first fastening comprises the first component (5, 6) of the joining element and the first vehicle part (10) comprises the second component (12, 13).

14. The joining system according to Claim 13, wherein the first component (5, 6) of the joining element comprises the first protrusion (5) and the second component (12, 13) of the first vehicle part (10) comprises the second hole (13).

15. The joining system according to Claim 13, wherein the first component (5, 6) of the joining element comprises the first hole (6) and the second component (12, 13) of the first vehicle part (10) comprises the second protrusion (12).
